# EUROPEAN PATENT SPECIFICATION

(11) **EP 3 536 138 B1**
(45) Date of publication and mention of the grant of the patent: **02.06.2021**
(21) Application number: 19161724.0
(22) Date of filing: 08.03.2019
(51) Int. Cl.: A01D 34/416, F04D 29/28

(54) **BLOWER ATTACHMENT FOR A TRIMMER HEAD**
GEBLÄSEAUFSATZ FÜR EINEN TRIMMERKOPF
FIXATION DE VENTILATEUR POUR UNE TÊTE DE TONDEUSE

(30) Priority: 09.03.2018 US 201862640816 P
(43) Date of publication of application: 11.09.2019
(73) Proprietor: TTI (Macao Commercial Offshore) Limited, Macao (MO)
(72) Inventor: Hoffman, Ronald J., Iva, SC South Carolina 29655 (US)
(74) Representative: Grünecker Patent- und Rechtsanwälte PartG mbB

(56) References cited:
- EP-A1- 0 496 084
- FR-A5- 2 241 211
- US-A- 4 047 299
- US-A- 4 068 376
- US-A- 4 524 515
- US-A- 5 657 542
- US-A1- 2006 005 347
- US-B2- 8 464 431

## Description

### TECHNICAL FIELD

The present invention relates to trimmers and, more specifically, to a blower attachment for a trimmer head.

### BACKGROUND

Landscape trimmers are generally used to cut grass and weeds, and are often used to edge around trees, near fences and walls, and along landscape borders. These trimmers generally include a trimmer head with a trimmer line (e.g., monofilament line) that is rotated for cutting or edging.

According to its abstract, EP-A-0496084 describes an impeller for centrifugal pumps, fans, turbines or the like, consisting of a hub, two discs, namely a hub disc and a cover disc, and blades which extend between the cover disc and the hub disc. To provide such an impeller which allows an easy, well-defined and secure connection of the impeller blades to the respective second disc, the impeller is characterised by orifices in one of the discs for the passage of tools, the orifices extending along the contour of the blades.

According to its abstract, FR-A-2241211 describes a system that allows elimination of the double speed and detachment zones on centrifugal blowers with blades inclined backwards. The blades each have a series of holes formed in them in a line running close to the discharge tip. A second row of holes can also be provided along a line parallel to the inlet edge. The invention is particularly for delivering hot gases into a chimney, and avoids the generation of vibration in the conduit etc. The sum of the diameters of the circular holes at the tip is typically between one half and one quarter of the length of the line on which they lie. A similar figure for the circular holes is typically a quarter of the length of line.

According to its abstract, US-A-2006/005347 describes a multi-purpose tool powered by an attached power source is used as an air blower capable of delivering a high-velocity stream of air when the multi-purpose tool is in a blower mode of operation and as a rotating string trimmer capable of trimming vegetation when in a trimmer mode of operation. The tool includes a tubular shaft boom and an internal drive shaft configured to be rotated by the power source, and an impeller operatively connected to the internal drive shaft so as to be rotatable within the chamber and a trimmer head positioned below the impeller, the trimmer head operatively connected to the internal drive shaft so as to be selectively rotatable by the power source. The tool also has a blower housing positioned at a distal end of the shaft boom including an enclosed chamber, a plurality of vents leading to the chamber, and a blower nozzle for directing air from the chamber, wherein the impeller is rotatably mounted in the chamber such that the housing defines an air pathway between the vents and the impeller. The multi-purpose tool also includes means for blocking the flow of air between vents and the impeller when the multi-purpose tool is in the trimmer mode of operation and means for disengaging the trimmer head from the internal drive shaft when the multi-purpose tool is in the blower mode.

### SUMMARY OF THE INVENTION

Described herein is a blower attachment that generally includes a first plate, a second plate spaced apart from and inclined with respect to the first plate, and a plurality of fins coupled between the first plate and the second plate. Adjacent fins define channels therebetween. Each channel extends between the first plate and the second plate, from a radially inner annular inlet opening to a radially outer outlet opening.

The blower attachment may further include an attachment body defining an opening receiving a body of a trimmer head.

The first plate may extend inwardly to a lower end of a perimeter of the annular inlet opening.

The second plate may be narrower than the first plate to define the annular inlet opening.

The blower attachment may be configured to be positioned on a trimmer head with the annular inlet opening oriented upwardly, away from a ground surface, and the blower attachment may further include a structure that has an interfering surface positioned in the opening to inhibit installation of a blower attachment in an inverted orientation.

The plurality of fins may be spaced substantially equidistant around a circumference and about a center axis of the first plate and the second plate.

The plurality of channels may have an axial height at the annular inlet opening, the axial height of each channel decreasing toward the outlet opening.

Also described herein is a blower attachment for use with a trimmer head. The blower attachment generally includes a first plate, a second plate spaced apart from and inclined with respect to the first plate, and an attachment body that defines an opening receiving a body of the trimmer head. A notch is defined in the opening and may be operable to receive a radial drive projection of the trimmer head when the blower attachment is in a driving engagement.

The attachment body may define a recess in the opening, the recess being configured to receive a boss of the trimmer head.

The blower attachment may further include a plurality of fins are coupled between the first plate and the second plate, and adjacent fins may define channels therebetween.

Each channel may extend between the first plate and the second plate from a radially inner annular inlet opening to a radially outer outlet opening.

The attachment body may define a plurality of notches spaced equidistantly around a perimeter of the opening.

The plurality of notches may be operable to receive a portion of the trimmer head.

The attachment body may include an inner rim that engages a radial wall of the trimmer head, an outer rim, and an annular plate extending therebetween.

The invention concerns assembly for a trimmer comprising a trimmer head and a blower attachment. The trimmer head includes a body defining an annular channel, a drive projection positioned on the body, and a retainer assembly. The retainer assembly includes a retainer that is adjustable between a retaining position, in which the retainer blocks the annular channel, and a release position. The blower attachment includes a first plate, a second plate spaced apart from and inclined with respect to the first plate, and an attachment body. The attachment body defines an opening that can receive the body of the trimmer head and can be received in the channel.

In the release position, the retainer may unblock the annular channel to allow the blower attachment to move relative to the annular channel.

The retainer may be radially movable between the retaining position and the release position.

The attachment body may define a notch operable to receive the drive projection.

The trimmer head may further include a boss projecting radially into the annular channel, and the attachment body may further define a recess in the opening positioned to receive the boss.

The assembly may further include a drive arrangement provided between the trimmer head and the blower attachment, the drive arrangement may be operable to transfer rotational movement of the trimmer head to the blower attachment.
Any of the optional features discussed above in relation to one aspect of the invention may, where appropriate, be applied to another aspect of the invention.

Other independent aspects of the invention may become apparent by consideration of the detailed description, claims and accompanying drawings.

### BRIEF DESCRIPTION OF THE DRAWINGS

Fig. 1 is a perspective view of a trimmer head in one embodiment of the invention.
Fig. 2 is a bottom view of a body of the head of Fig. 1.
Fig. 3 is a bottom view of the head of Fig. 1 with an attachment supported thereon.
Fig. 4 is a bottom view of the head and the attachment as shown in Fig. 3, with the lower housing removed.
Fig. 5 is a bottom view of the head and the attachment as shown in Fig. 3, with a retainer removed.
Fig. 6 is a cross-sectional side view of the head and the attachment taken generally along line 6-6 in Fig. 3.
Fig. 7 is a top perspective view of an attachment, such as a blower attachment in one embodiment of the invention.
Fig. 8 is a bottom perspective view of the blower attachment of Fig. 7.
Fig. 9 is a top view of the blower attachment of Fig. 7.
Fig. 10 is a bottom view of the blower attachment of Fig. 7.
Fig. 11 is a side view of the blower attachment of Fig. 7.
Fig. 12 is a perspective cross-sectional view of the blower attachment of Fig. 7, taken generally along line 12-12 in Fig. 9.
Fig. 13 is a side cross-sectional view of the blower attachment of Fig. 7, also taken generally along line 12-12 in Fig. 9.

### DETAILED DESCRIPTION

Before any independent embodiments are explained in detail, it is to be understood that the invention is not limited in its application to the details of construction and the arrangement of components set forth in the following description or illustrated in the following drawings. The invention is capable of other independent embodiments and of being practiced or of being carried out in various ways. Also, it is to be understood that the phraseology and terminology used herein is for the purpose of description and should not be regarded as limiting.

Use of "including" and "comprising" and variations thereof as used herein is meant to encompass the items listed thereafter and equivalents thereof as well as additional items. Use of "consisting of' and variations thereof as used herein is meant to encompass only the items listed thereafter and equivalents thereof. Unless specified or limited otherwise, the terms "mounted," "connected," "supported," and "coupled" and variations thereof are used broadly and encompass both direct and indirect mountings, connections, supports, and couplings.

Relative terminology, such as, for example, "about", "approximately", "substantially", etc., used in connection with a quantity or condition would be understood by those of ordinary skill to be inclusive of the stated value and has the meaning dictated by the context (for example, the term includes at least the degree of error associated with the measurement of, tolerances (e.g., manufacturing, assembly, use, etc.) associated with the particular value, etc.). Such terminology should also be considered as disclosing the range defined by the absolute values of the two endpoints. For example, the expression "from about 2 to about 4" also discloses the range "from 2 to 4". The relative terminology may refer to plus or minus a percentage (e.g., 1%, 5%, 10% or more) of an indicated value.

Also, the functionality described herein as being performed by one component may be performed by multiple components in a distributed manner. Likewise, functionality performed by multiple components may be consolidated and performed by a single component. Similarly, a component described as performing particular functionality may also perform additional functionality not described herein. For example, a device or structure that is "configured" in a certain way is configured in at least that way but may also be configured in ways that are not listed.

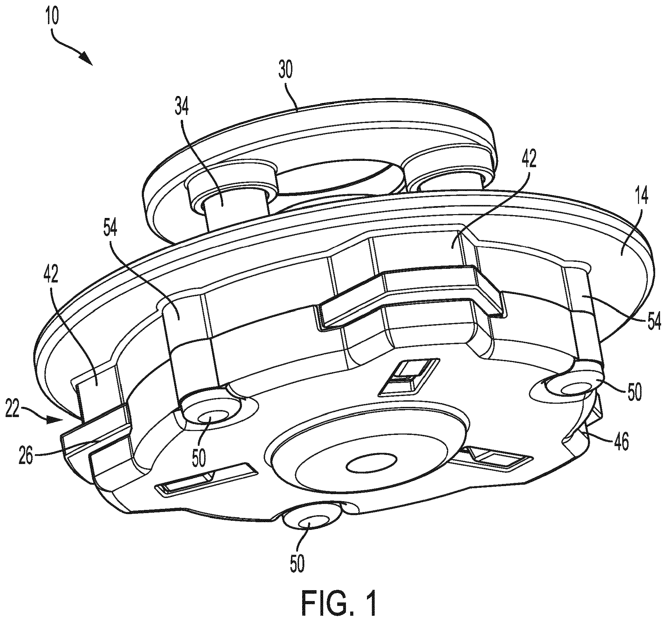

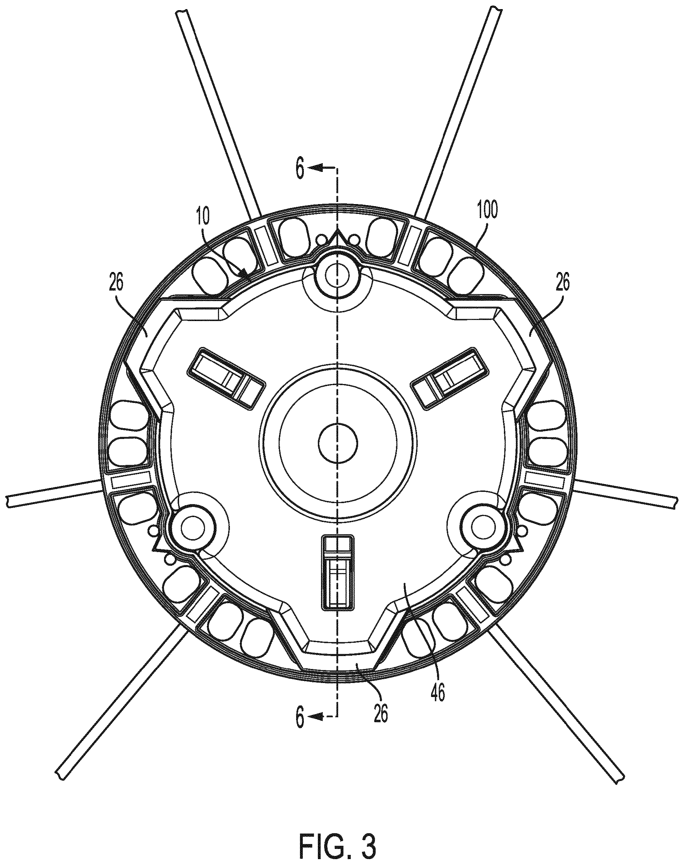

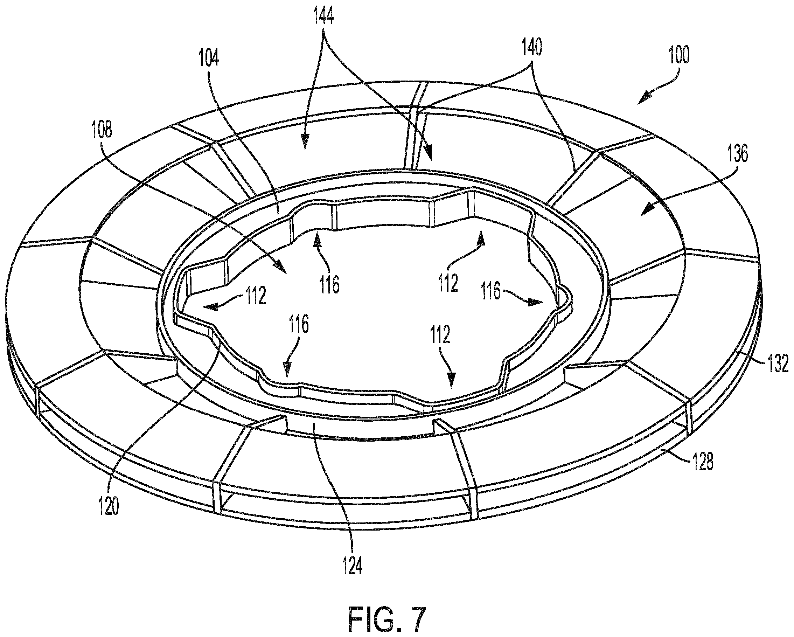

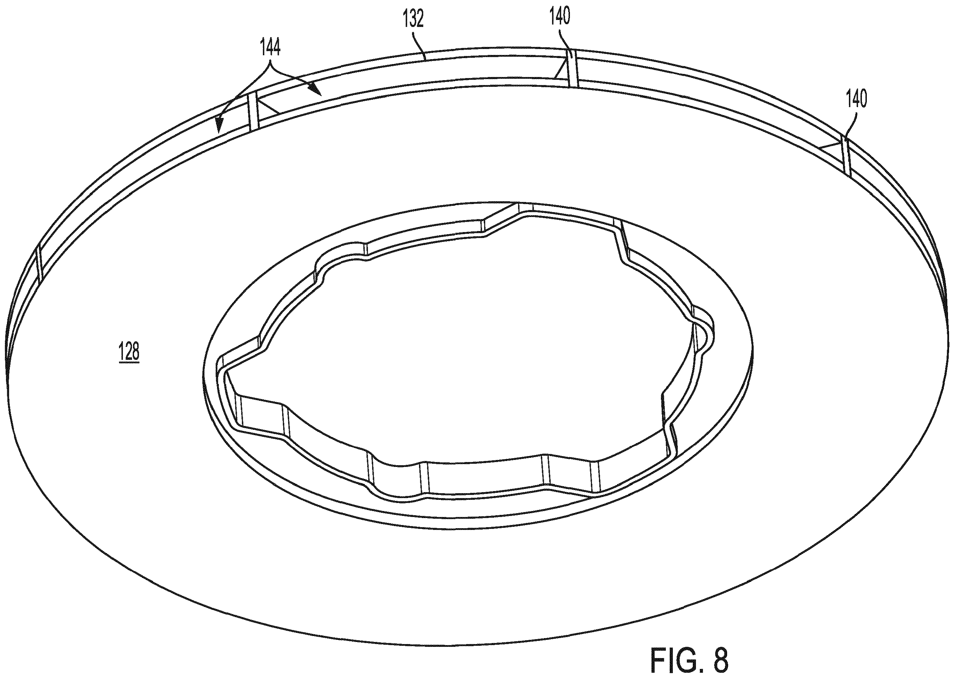

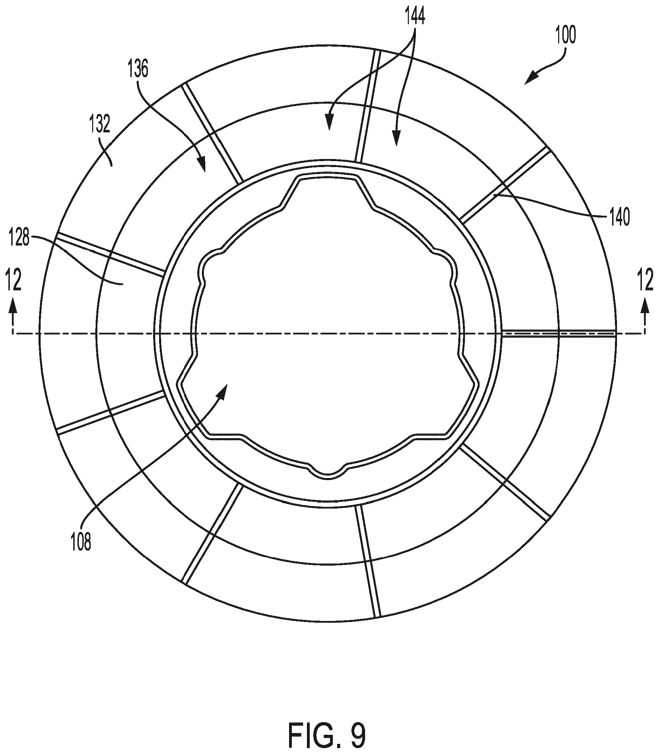

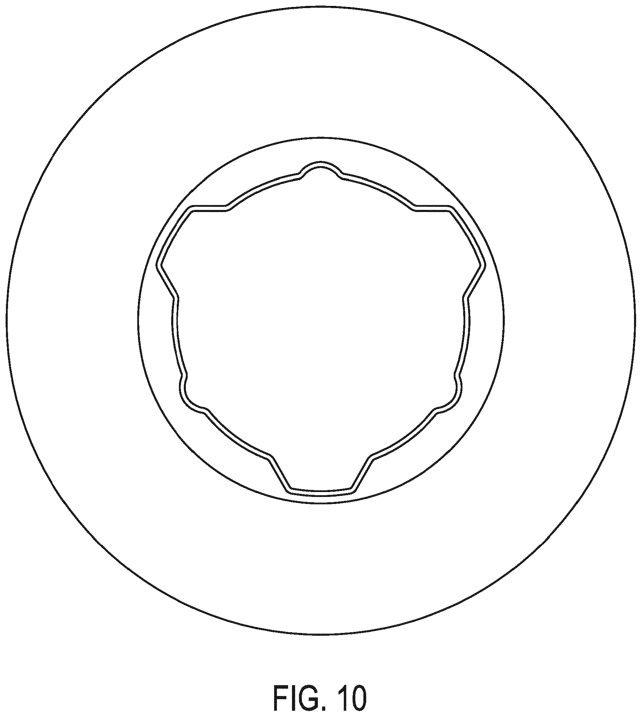

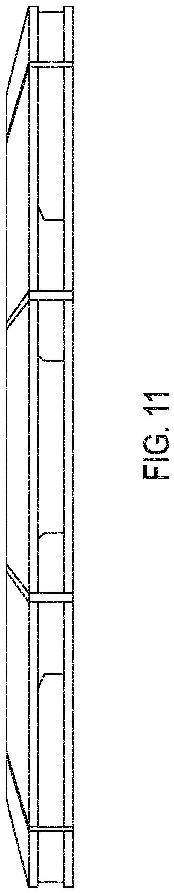

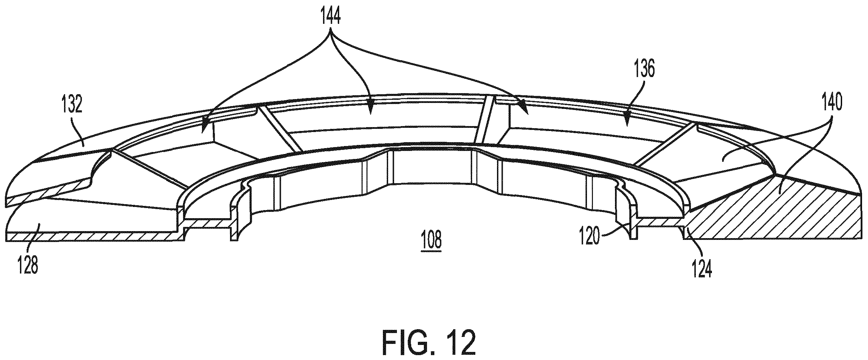

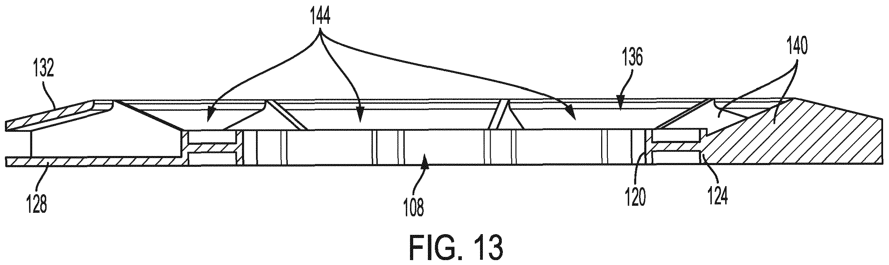

In general, the present invention relates to a blower attachment 100 (see Figs. 7-13) for use with a trimmer head 10 (see Figs. 1-6). The blower attachment 100 is selectively and removably coupled to the head 10, along with various other attachments 100 to conduct associated operations (e.g., cutting, trimming (see Figs. 3-6), edging, etc.) with the trimmer. The head 10 and each attachment 100 have a complementary interface for installation and removal/replacement of the attachment(s) 100.

The trimmer head 10 (see Figs. 1-6) is for use on an exemplary trimmer (not shown). Such a trimmer generally includes a shaft with a handle toward one end and a motor housing enclosing an electric motor with a motor-driven output or drive shaft, having an axis of rotation, for connection to a trimmer head on the other end. Various powered trimmers (e.g., battery-powered, gas-powered, etc.) may be used with the trimmer head 10. Exemplary trimmers are described and illustrated in U.S. Patent No. 8,464,431, issued on June 18, 2013, and in U.S. Patent No. 6,108,914, issued August 29, 2000.

As shown in Figs. 1-6, the head 10 generally includes a body 14 rotatable about an axis of rotation A and defining an axial opening 18 for connection to the trimmer drive shaft. The body 14 defines an annular channel 22 for receiving a selected attachment 100. The head 10 includes a retainer assembly cooperating with the body 14 to selectively retain the attachment 100.

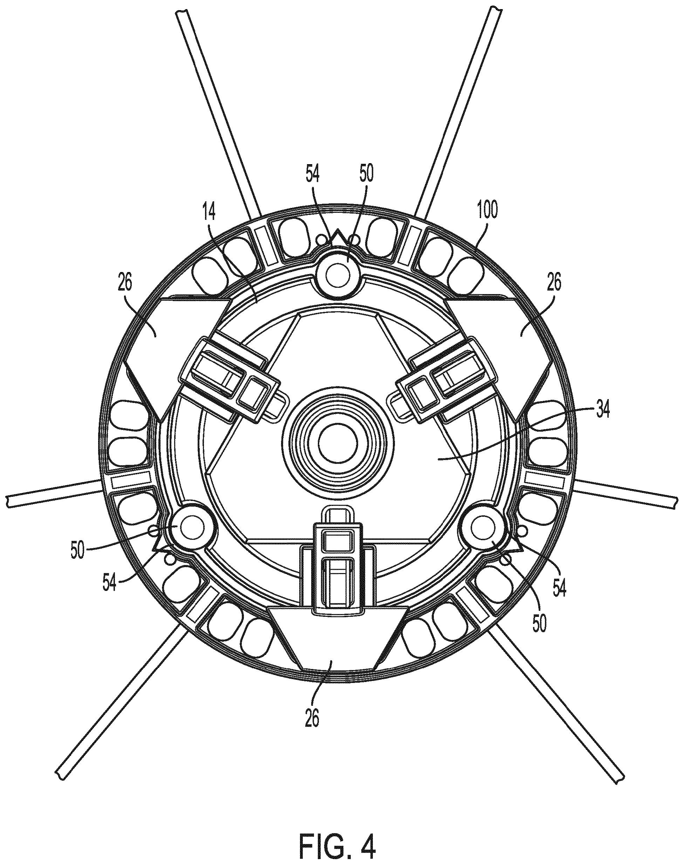

In the illustrated construction, the retainer assembly includes a number (e.g., three shown) of retainers 26 adjustable between a retaining position (Figs. 3-4 and 6), in which the retainers 26 cover or block the channel 22 to retain the selected attachment 100, and a release position (not shown), in which the retainers 26 uncover or unblock the channel 22 to allow the attachment 100 to move relative to the channel 22 (e.g., to be removed or installed). As shown in Fig. 4, the retainers 26 have substantially the same shape (e.g., trapezoidal) and are spaced substantially equidistant about the axis A (e.g., spaced about 120° apart).

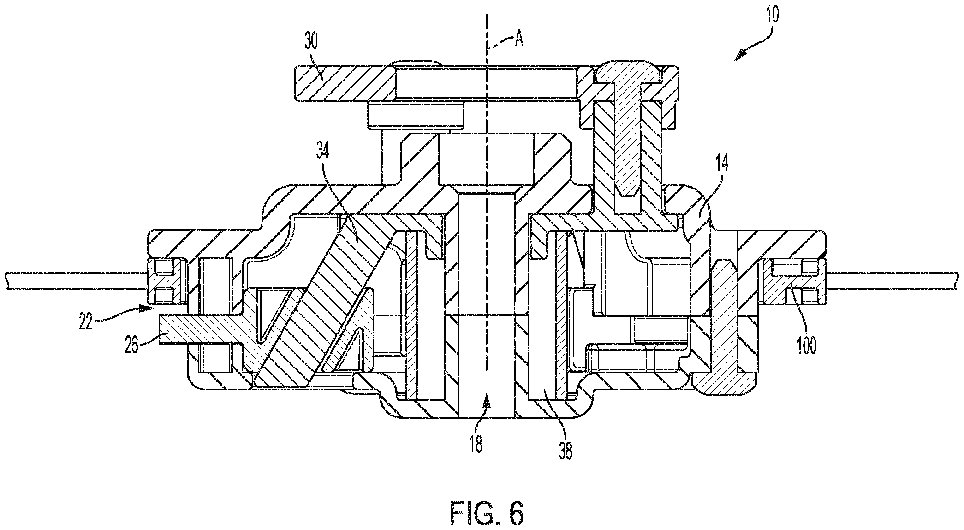

An actuating mechanism (see Figs. 1 and 6; e.g., including a strike plate 30 and a retainer carrier 34) is operable by a user (e.g., by engaging the strike plate 30, a lever (not shown), a guard (not shown), etc.) to adjust the position of the retainers 26. A biasing member biases the retainers 26 to the retaining position; for example, in the illustrated construction (see Fig. 6), a spring 38 biases the actuating mechanism to a position corresponding to the retaining position of the retainers 26.

In the illustrated construction, the retainers 26 are radially movable between the retaining and the release positions, and the actuating mechanism is axially movable to adjust the position of the retainers 26. In other constructions (not shown), the retainers 26 and/or the actuating mechanism may be movable in another manner (e.g., circumferentially, axially, radially, combinations thereof, etc.) between the positions.

In other constructions (not shown), fewer or more than three retainers 26 may be provided. Also, each or all of the retainers 26 may have a different shape than illustrated. In addition, the retainers 26 may have a different spacing (e.g., equidistant based on the number of retainers 26, non-equidistant, etc.).

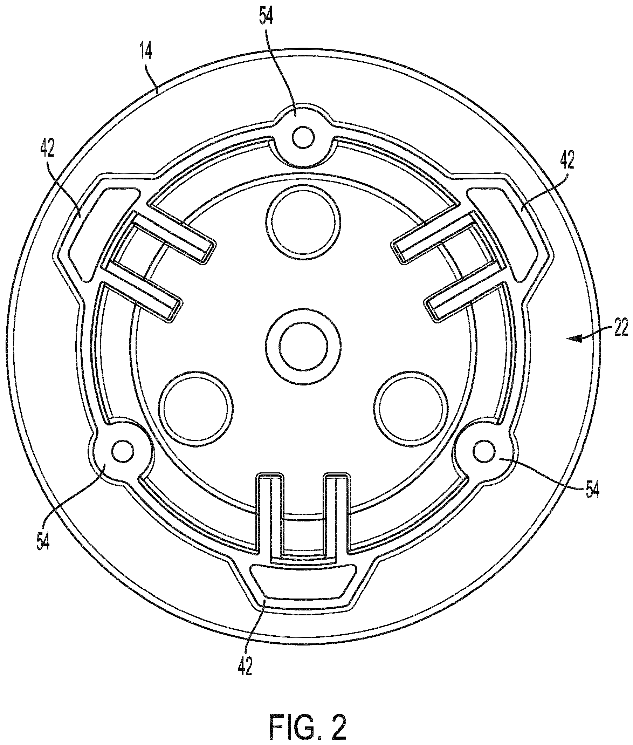

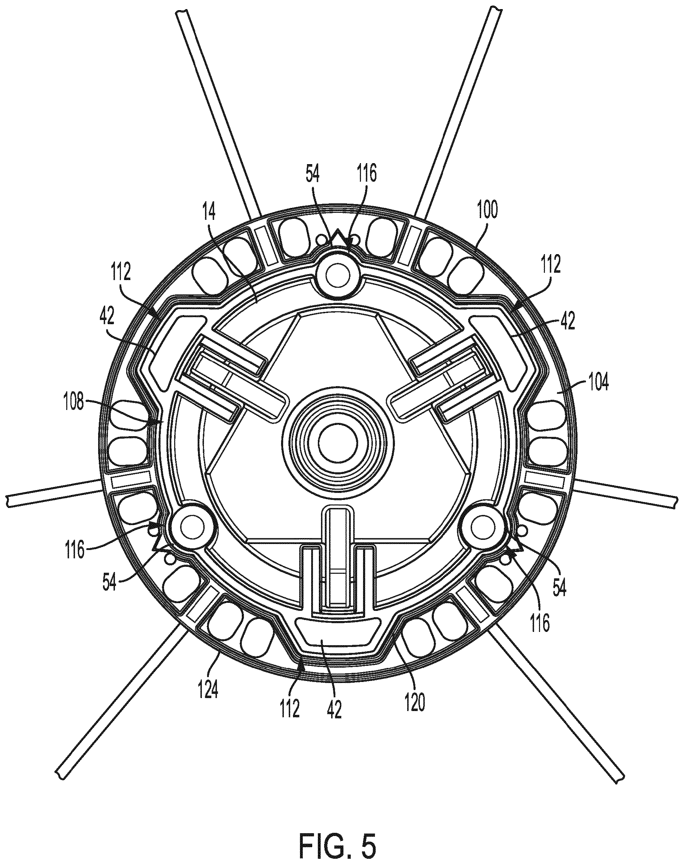

A drive arrangement is provided between the head 10 and the attachment 100 to transfer rotational movement of the head 10 to the attachment 100. In the illustrated construction, body 14 includes (see Figs. 2 and 5) a number (e.g., three shown) of radial projections 42 drivingly engageable with a supported attachment 100. The illustrated projections 42 have substantially the same shape (e.g., trapezoidal) and are spaced substantially equidistant about the axis A (e.g., spaced about 120° apart). In the illustrated construction, the retainers 26 are positioned circumferentially in alignment with and overlying an associated projection 42 of the body 14.

In other constructions (not shown), the body 14 may include fewer or more than three projections 42. Also, each or all of the projections 42 may have a different shape than illustrated. In addition, the projections 42 may have a different spacing (e.g., equidistant based on the number of projections 42 on the body 14, non-equidistant, etc.). Further, the projections 42 may extend in and/or engage the attachment 100 in a different manner (e.g., axially, circumferentially, combinations thereof, etc.).

The head 10 also includes (see Figs. 1 and 3) a lower housing 46 connectable to the body 14, for example, with fasteners 50, to house and/or retain components of the head 10 as a unit. The lower housing 46 covers the lower portion of the components of the head 10 to inhibit cut material, debris, etc. from interfering with operation of the components. The lower housing 46 is sized to allow installation and removal of the attachment 100. The body 14 includes (see Figs. 2 and 4-5) an associated boss 54 for each fastener 50, and each illustrated boss 54 projects radially into the channel 22.

Figs. 7-13 illustrate an attachment 100, such as, in the illustrated example, a blower attachment. In other constructions, the attachment 100 may include, for example, a cutter (not shown), a string trimmer (see Figs. 2-6), an edger (not shown), etc. The attachment 100 includes a body 104 defining a central opening 108 to engage the body 14 of the head 10 (e.g., in the channel 22).

The attachment 100 defines a number (e.g., three shown) of notches 112 and a number (e.g., three shown) of recesses 116 around the perimeter of the opening 108. The notches 112 are complementary to and drivingly engageable with the projections 42 on the body 14 to cooperate to provide the drive arrangement. The illustrated notches 112 are shaped (e.g., trapezoidal) and positioned (e.g., equidistant; about 120° apart) to receive the projections 42. The recesses 116 are shaped and positioned to receive the bosses 54. In the illustrated construction, the attachment 100 is supportable on the body 14 in any position in which the projections 42 engage the notches 112.

In other constructions (not shown), attachment 100 may include fewer or more than three notches 112. Also, each or all of the notches 112 may have a different shape than illustrated. In addition, the notches 112 may have a different spacing (e.g., equidistant based on the number of notches 112, non-equidistant, etc.). In constructions in which the interface between the body 14 and the attachment 100 is non-uniform (e.g., the projections 42 and corresponding notches 112 have a different shape and/positioning), the attachment 100 may be installed in a limited number of rotational positions relative to the body 14. In other constructions (not shown), the projections 42 and notches 112 may be reversed and positioned on the other of the body 14 and the attachment 100.

The body 104 includes an inner rim 120, which engages the radial wall of the channel 22 of the body 14, an outer rim 124, and an annular plate 126 extending therebetween. The operating portion of the attachment 100, described in more detail below, extends from the body 104.

As shown in Figs. 7-8 and 11-13, the blower attachment 100 includes annular first and second plates 128, 132. The outer diameters of the plates 128, 132 are substantially equal. The first plate 128 extends inwardly to the lower end of the outer rim 124. The second plate 132 is narrower than the first plate 128 to define an annular opening 136.

The blower attachment 100 is positioned on the head 10 with the annular opening 136 oriented upwardly, away from the ground. The inner diameter of the second plate 132 is spaced radially outwardly from the body 14 of the head 10, which creates a gap (not shown) between the body 14 and the second plate 132.

The blower attachment 100 may include structure (not shown) to ensure that the blower attachment 100 is supported in this orientation on the head 10. The structure may include an interfering surface in the opening 108 (e.g., in a notch 112) which inhibits installation of the blower attachment 100 in the inverted orientation without interfering with operation of the associated retainer 26 or the radial drive projection 42. The structure may include an indication to the user of the proper orientation (e.g., "This side up.").

The plates 128, 132 are spaced apart along the axis A, and the second plate 132 is inclined with respect to the first plate 128 from the outer diameter toward the axis A. The illustrated second plate 132 is closer to the first plate 128 proximate the outer diameters of the plates 128, 132 and is spaced further from the first plate 128 proximate the inner diameter of the second plate 132. In other words, the second plate 132 is inclined such that the distance between the plates 128, 132 increases in a direction towards the inner diameter of the second plate 132 and the axis A.

A plurality of fins 140 is positioned between the plates 128, 132. In the illustrated embodiment, each fin 140 extends from and is substantially orthogonal to the first plate 128. Each illustrated fin 140 has a length equal to the distance between the inner diameter and the outer diameter of the first plate 128. A radially outer, upper end of each fin 140 is inclined to match the surface of the second plate 132. A radially inner, upper end of each fin 140 is exposed and is inclined in the opposite direction. In other words, a height of the exposed portion of the fins 140, with respect to the first plate 128, decreases from the inner diameter of the second plate 132 to the inner diameter of the first plate 128 (to a height below the upper end of the outer rim 124).

The fins 140 are spaced apart around the circumference of the plates 128, 132. In the illustrated embodiment, the fins 140 are spaced substantially equidistant about the axis A. Adjacent fins 140 define a channel 144 therebetween in the opening 136 and between the plates 128, 132. Due to the inclination of the second plate 132, each channel 144 is axially taller at the opening 136, and the height of each channel 144 decreases toward the outer diameters of the plates 128, 132.

To install the blower attachment 100 on the head 10, the actuating mechanism is operated (e.g., the strike plate 30 is depressed to move the carrier 34 downwardly) to adjust the retainers 26 to the release position, opening the channel 22. The blower attachment 100 is installed on the body 14 into the channel 22 with each drive projection 42 being received in an associated notch 112 and each boss 54 being received in an associated recess 116. To retain the blower attachment 100, the actuating mechanism is operated (e.g., the strike plate 30 is released, and the spring 38 moves the carrier 34 upwardly) to adjust the retainers 26 to the retaining position, covering the channel (see Fig. 6).

To remove the blower attachment 100, the process is reversed. The actuating mechanism is operated to move the retainers 26 to the release position, uncovering the channel 22. The blower attachment 100 may then be removed from the channel 22 and from the head 10. If the trimmer is held in the operating orientation, the blower attachment 100 will fall off of the head 10.

To install another attachment 100, the user may invert the trimmer so that the head 10 faces upwardly and place the attachment 100 on the head 10. The actuating mechanism is operated to move the retainers 26 to the retaining position, covering the channel 22 and retaining the attachment 100. Due to the simplicity of changing the attachment 100, a user may interchange attachments 100 very quickly (e.g., within seconds), with different attachments 100 being used for different operations (e.g., cutting, trimming, edging, blowing, etc.).

With the blower attachment 100 supported on the head 10, operation of the trimmer causes rotation of the head 10 and the driven attachment 100. The rotating blower attachment 100 draws air into the opening 136 and expels air radially outwardly through the channels 144 at an increased velocity. The generated air flow from the blower attachment 100 may blow debris (e.g., grass trimmings, leaves, etc.) from a work surface (e.g., a sidewalk, driveway, etc.). Orienting the blower attachment 100 with the opening 136 facing upwardly ensures that debris is not drawn into and expelled from the blower attachment 100.

The embodiment(s) described above and illustrated in the figures are presented by way of example only and are not intended as a limitation upon the concepts and principles of the present invention. As such, it will be appreciated that variations and modifications to the elements and their configuration and/or arrangement exist within the scope of the claims.

## Claims

1. An assembly for a trimmer, the assembly comprising a trimmer head (10) including a body (14) defining an annular channel (22), and a drive projection (42) positioned on the body (14), and a blower attachment (100) including a first plate (128), **characterized in that**
the trimmer head (10) further comprises a retainer assembly including a retainer (26) adjustable between a retaining position, in which the retainer (26) blocks the annular channel (22), and a release position, and
the blower attachment (100) further comprises
a second plate (130) spaced apart from and inclined with respect to the first plate (128), and
an attachment body (104) defining an opening (108) receiving the body (14) of the trimmer head (10) and being received in the annular channel (22).

2. The assembly of claim 1, wherein the opening (108) of the attachment body (104) defines a notch (112), the notch (112) is arranged to receive and drivingly engage with the drive projection (42).

3. The assembly of claim 1, wherein the opening (108) of the attachment body (104) defines a plurality of notches (112), each of the notches (112) is arranged to receive and drivingly engage with the drive projection (42).

4. The assembly of claim 3, wherein the plurality of notches (112) are spaced equidistantly around a perimeter of the opening.

5. The assembly of any one of claims 1 to 4, wherein the opening (108) of the attachment body (104) further defines a recess (116) arranged to receive a boss (54), of the trimmer head (10), projecting radially into the annular channel (22).

6. The assembly of any one of claims 1 to 4, wherein the opening (108) of the attachment body (104) further defines a plurality of recesses (116), each arranged to receive a boss (54), of the trimmer head (10), projecting radially into the annular channel (22).

7. The assembly of any one of the preceding claims, further comprising a plurality of fins (140) coupled between the first plate (128) and the second plate (130), adjacent fins (140) defining channels (144) therebetween, each of the channels (144) extending between the first plate (128) and the second plate (130), from a radially inner annular inlet opening (136) to a radially outer outlet opening.

8. The assembly of claim 7, wherein the plurality of fins (140) are spaced substantially equidistant around a circumference and about a center axis of the first plate (128) and the second plate (130).

9. The assembly of claim 7 or 8, wherein the plurality of channels (144) has an axial height at the annular inlet opening (136), the axial height of each channel (144) decreasing toward the outlet opening.

10. The assembly of any one of claims 7 to 9, wherein the blower attachment (100) is configured to be positioned on the trimmer head (10) with the annular inlet opening (136) oriented upwardly away from a ground surface, and wherein the blower attachment (100) further comprises a structure including an interfering surface positioned in the opening (108) to inhibit installation of the blower attachment (100) in an inverted orientation.

11. The assembly of any one of claims 7 to 10, wherein the second plate (130) is narrower than the first plate (128) to define the annular inlet opening (136).

12. The assembly of any one of claims 7 to 11, wherein the first plate (128) extends inwardly to a lower end of a perimeter of the annular inlet opening (136).

13. A trimmer comprising the assembly of any one of claims 1 to 12.

## Patentansprüche

1. Baugruppe für einen Trimmer umfassend einen Trimmer-Kopf (10) mit einem Körper (14), der einen ringförmigen Kanal (22) aufweist, und mit einem auf dem Körper (14) angeordneten Antriebs-Vorsprung (42), und einen Gebläse-Aufsatz (100) mit einer erste Platte (128), **dadurch gekennzeichnet, dass**
der Trimmer-Kopf (10) ferner eine Halte-Baugruppe mit einer Halterung (26) umfasst, die einstellbar ist zwischen einer Halteposition, in der die Halterung (26) den ringförmigen Kanal (22) blockiert und einer Freigabeposition, und
der Gebläse-Aufsatz (100) ferner eine zweite Platte (130), die beabstandet von und geneigt in Bezug auf die erste Platte (128) ist, und einen Anbringungskörper (104), der eine den Körper (14) des Trimmer-Kopfs (10) aufnehmende Öffnung (108) aufweist, und der in dem ringförmigen Kanal (22) aufgenommen ist, umfasst.

2. Baugruppe nach Anspruch 1, wobei die Öffnung (108) des Anbringungskörpers (104) eine Nut (112) aufweist, die ausgebildet ist, um den Antriebs-Vorsprung (42) aufzunehmen und in diesen antriebsmäßig einzugreifen.

3. Baugruppe nach Anspruch 1, wobei die Öffnung (108) des Anbringungskörpers (104) eine Mehrzahl von Nuten (112) definiert, und jede der Nuten (112) ausgebildet ist, um den antreibenden Vorsprung (42) aufzunehmen und in diesen antriebsmäßig einzugreifen.

4. Baugruppe nach Anspruch 3, wobei die Mehrzahl der Nuten (112) äquidistant um einen Umfang der Öffnung verteilt angeordnet sind.

5. Baugruppe nach einem der Ansprüche 1 bis 4, wobei die Öffnung (108) des Anbringungskörpers (104) ferner eine Aussparung (116) aufweist, die ausgebildet ist, um einen radial in den ringförmigen Kanal (22) vorstehenden Vorsprung (54) des Trimmer-Kopfs (10) aufzunehmen.

6. Baugruppe nach einem der Ansprüche 1 bis 4, wobei die Öffnung (108) des Anbringungskörpers (104) ferner eine Mehrzahl von Aussparungen (116) definiert, von denen jede dazu ausgebildet ist, einen radial in den ringförmigen Kanal (22) vorspringenden Vorsprung (54) des Trimmer-Kopfs (10) aufzunehmen.

7. Baugruppe nach einem der vorhergehenden Ansprüche, ferner umfassend eine Mehrzahl von Lamellen (140), die zwischen der ersten Platte (128) und der zweiten Platte (130) angeordnet sind, wobei benachbarte Lamellen (140) zwischen sich Kanäle (144) aufweisen, und sich jeder der Kanäle (144) zwischen der ersten Platte (128) und der zweiten Platte (130) von einer radial inneren ringförmigen Einlassöffnung (136) zu einer radial äußeren Auslassöffnung erstreckt.

8. Baugruppe nach Anspruch 7, wobei die Mehrzahl von Lamellen (140) im Wesentlichen äquidistant um einen Umfang und um eine Mittelachse der ersten Platte (128) und der zweiten Platte (130) angeordnet sind.

9. Baugruppe nach Anspruch 7 oder 8, wobei die Mehrzahl von Kanälen (144) an der ringförmigen Einlassöffnung (136) eine axiale Höhe aufweist und die axiale Höhe von jedem Kanal (144) in Richtung der Auslassöffnung abnimmt.

10. Baugruppe nach mindestens einem der Ansprüche 7 bis 9, wobei der Gebläse-Aufsatz (100) ausgebildet ist, um derart auf dem Trimmer-Kopf (10) angeordnet zu werden, dass die ringförmigen Einlassöffnung (136) nach oben, weg von einer Bodenoberfläche weist, und wobei der Gebläse-Aufsatz (100) ferner eine Struktur umfasst, die eine Eingriffsfläche aufweist, die in der Öffnung (108) angeordnet ist, um eine Anbringung des Gebläse-Aufsatzes (110) in einer umgekehrten Ausrichtung zu verhindem.

11. Baugruppe nach einem der Ansprüche 7 bis 10, wobei die zweite Platte (130) schmäler ist als die erste Platte (128), um die ringförmige Einlassöffnung (136) zu definieren.

12. Baugruppe nach einem der Ansprüche 7 bis 11, wobei sich die erste Platte (128) nach innen zu einem unteren Ende eines Umfangs der ringförmigen Einlassöffnung (136) erstreckt.

13. Trimmer umfassend die Baugruppe nach einem der Ansprüche 1 bis 12.

## Revendications

1. Ensemble pour un taille-bordure, l'ensemble comprenant une tête de taille-bordure (10) comprenant un corps (14) définissant un canal annulaire (22), et une projection d'entraînement (42) positionnée sur le corps (14), et une fixation de souffleur (100) comprenant une première plaque (128), **caractérisé en ce que**
la tête de taille-bordure (10) comprend en outre un ensemble de retenue comprenant un dispositif de retenue (26) ajustable entre une position de retenue, dans lequel le dispositif de retenue (26) bloque le canal annulaire (22), et une position de libération, et
la fixation de souffleur (100) comprend en outre
une seconde plaque (130) espacée à l'écart de, et inclinée par rapport à, la première plaque (128), et
un corps de fixation (104) définissant une ouverture (108) recevant le corps (14) de la tête de taille-bordure (10) et étant reçu dans le canal annulaire (22).

2. Ensemble selon la revendication 1, l'ouverture (108) du corps de fixation (104) définissant une encoche (112), l'encoche (112) étant disposée pour recevoir et s'engager par entraînement avec la projection d'entraînement (42).

3. Ensemble selon la revendication 1, l'ouverture (108) du corps de fixation (104) définissant une pluralité d'encoches (112), chacune des encoches (112) étant disposée pour recevoir et engager de manière à entraîner la projection d'entraînement (42).

4. Ensemble selon la revendication 3, la pluralité des encoches (112) étant espacées de manière équidistante autour d'un périmètre de l'ouverture.

5. Ensemble selon l'une quelconque des revendications 1 à 4, l'ouverture (108) du corps de fixation (104) définissant en outre un renfoncement (116) disposé pour recevoir une bosse (54), de la tête du taille-bordure (10), se projetant radialement dans le canal annulaire (22).

6. Ensemble selon l'une quelconque des revendications 1 à 4, l'ouverture (108) du corps de fixation (104) définissant en outre une pluralité de renfoncements (116), chacun disposé pour recevoir une bosse (54), de la tête du taille-bordure (10), se projetant radialement dans le canal annulaire (22).

7. Ensemble selon l'une quelconque des revendications précédentes, comprenant en outre une pluralité d'ailettes (140) accouplées entre la première plaque (128) et la seconde plaque (130), les ailettes (140) adjacentes définissant des canaux (144) entre elles, chacun des canaux (144) s'étendant entre la première plaque (128) et la seconde plaque (130), à partir d'une ouverture d'orifice d'entrée annulaire (136) radialement interne vers une ouverture d'orifice de sortie radialement externe.

8. Ensemble selon la revendication 7, la pluralité d'ailettes (140) étant espacées sensiblement de manière équidistante autour d'une circonférence et autour d'un axe central de la première plaque (128) et de la seconde plaque (130).

9. Ensemble selon la revendication 7 ou 8, la pluralité des canaux (144) ayant une hauteur axiale au niveau de l'ouverture d'orifice d'entrée annulaire (136), la hauteur axiale de chaque canal (144) baissant vers l'ouverture d'orifice de sortie.

10. Ensemble selon l'une quelconque des revendications 7 à 9, la fixation de souffleur (100) étant conçue pour être positionnée sur la tête du taille-bordure (10) avec l'ouverture d'orifice d'entrée annulaire (136) orientée vers le haut à l'opposé d'une surface du sol, et la fixation de souffleur (100) comprenant en outre une structure comprenant une surface interférente positionnée dans l'ouverture (108) pour inhiber l'installation de la fixation du souffleur (100) en une orientation inversée.

11. Ensemble selon l'une quelconque des revendications 7 à 10, la seconde plaque (130) étant plus étroite que la première plaque (128) pour définir l'ouverture d'orifice d'entrée annulaire (136).

12. Ensemble selon l'une quelconque des revendications 7 à 11, la première plaque (128) s'étendant vers l'intérieur jusqu'à une extrémité inférieure d'un périmètre de l'ouverture d'orifice d'entrée annulaire (136).

13. Taille-bordure comprenant l'ensemble selon l'une quelconque des revendications 1 à 12.
